# FASCICULE DE BREVET EUROPEEN

(11) **EP 3 847 378 B1**
(45) Date de publication et mention de la délivrance du brevet: **19.01.2022**
(21) Numéro de dépôt: 20785772.3
(22) Date de dépôt: 17.06.2020
(51) Int. Cl.: F16B 12/24, F16B 5/00, A47B 47/04

(54) **DISPOSITIF D'ASSEMBLAGE DE MODULES ET ÉLÉMENT DE MOBILIER ASSOCIÉ**
VORRICHTUNG ZUR MONTAGE VON MODULEN UND ZUGEHÖRIGES MÖBELELEMENT
DEVICE FOR ASSEMBLING MODULES AND ASSOCIATED FURNITURE ELEMENT

(30) Priorité: 25.06.2019 FR 1906891
(43) Date de publication de la demande: 14.07.2021
(73) Titulaire: CENTRE BOIS MASSIF SAS, 18210 Saint-Pierre-les-Étieux (FR)
(72) Inventeur: FRITSCH, Henri, 83000 Toulon (FR); FRITSCH, Bertrand, 83000 Toulon (FR)
(74) Mandataire: Med'inVent Consulting
(86) Numéro de dépôt international: PCT/FR2020/051053
(87) Numéro de publication internationale: WO 2020/260803

(56) Documents cités:
- US-A1- 2013 287 484
- US-A1- 2014 190 112
- US-A1- 2017 360 193

## Description

L'invention concerne le domaine des dispositifs ou systèmes d'assemblage de deux modules. De tels dispositifs ou systèmes d'assemblage sont utilisés pour tous types d'usage et préférentiellement mais non limitativement, en application avec des éléments de mobiliers modulables, tels que, à titre d'exemples non limitatifs, des éléments de rangements, des étagères suspendues ou sur pieds, une armoire, un chiffonnier, une bibliothèque, une commode, une table, une console, un bar.

Aujourd'hui, dans le domaine du mobilier comme dans bon nombre de domaines, la tendance actuelle est « au faire soi-même » ou « do it yourself » selon une terminologie anglo-saxonne. De plus en plus, nombre d'enseignes, spécialisées dans la conception et la vente de détail de mobilier et objets de décoration, outre des éléments de mobilier et objets de décoration prêts à poser, offrent également à la vente des éléments de mobilier à monter en kit. En outre, de telles enseignes proposent, entre autres, des cours de bricolage ou concours de montage d'éléments de mobilier. De tels éléments de mobilier à monter en kit présentent en effet un grand nombre d'avantages, puisqu'ils s'avèrent généralement être moins chers et plus simples à produire et à transporter, un client pouvant les rapporter lui-même à son domicile.

Parmi toutes les grandes enseignes de renommée mondiale, la société IKEA vendant du mobilier sous la marque déposée éponyme, se distingue des autres enseignes, puisqu'elle est l'une des premières à avoir proposé des meubles ou éléments de mobilier en kit, conditionnés depuis les années dans des emballages sous la forme d'un ou plusieurs paquets sensiblement plats. En outre, selon les lignes de produits, les éléments de mobilier en kit sont également personnalisables en fonction des envies et/ou des besoins du consommateur au moment de l'achat : il est éventuellement possible, par exemple, d'ajouter des blocs avec des portes ou des blocs avec des tiroirs à certaines étagères, dont les couleurs pourront avantageusement être sélectionnées au moment de l'achat, permettant ainsi la création d'un élément de mobilier « sur mesure » et personnalisé. La renommée de cette société n'est plus à faire, puisque, outre des prix très compétitifs accessibles à un grand nombre, les éléments de mobilier en kit qu'elle propose sont facilement transportés dans les habitations de leurs clients, ces derniers effectuant généralement par eux-mêmes l'assemblage desdits éléments de mobilier à l'aide d'une notice de montage prévue à cet effet au sein des emballages.

Bien que largement plébiscités, les éléments de mobilier proposés par cette grande enseigne peuvent présenter parfois quelques inconvénients. Selon le type, les dimensions ou encore les matériaux composant de tels éléments de mobilier, il n'est parfois pas si aisé de transporter les différents emballages du kit à monter chez soi. Par ailleurs, certains éléments de mobilier peuvent requérir l'emploi d'outils spécifiques pour assurer leurs montages, les clients ou consommateurs n'ayant pas toujours, chez eux, à disposition immédiate de tels outils. Également, de par leur fabrication sur de grandes chaînes de production, il n'est pas toujours possible pour un client ou consommateur d'obtenir des éléments de mobilier sur mesure ou adaptés à leurs besoins et/ou leurs envies, permettant ainsi d'optimiser l'espace du lieu d'installation dudit élément de mobilier, puisque les éléments de mobilier sont généralement standardisés. Enfin, une fois montés, il n'est parfois pas envisageable ou tout du moins très mal aisé de désassembler certains éléments de mobilier pour les transporter et les monter sur un nouveau lieu d'installation ou encore de les transformer en un nouvel élément de mobilier. La personnalisation offerte par de tels éléments de mobilier est donc limitée aux choix offerts au moment de l'achat desdits éléments de mobilier.

Pour pallier certains des inconvénients précédemment mentionnés, d'autres enseignes ont développé des concepts d'éléments de mobilier sur mesure. A titre d'exemples non limitatifs, depuis 2015, la société polonaise TYLKO vend des produits sous la marque déposée éponyme et offre à la vente des éléments de mobilier sous la forme d'étagères, bibliothèques, meubles de télévision ou à chaussures ou encore des commodes, sur mesure pour que chaque consommateur ou client puisse choisir un élément de mobilier spécifique en fonction de son lieu d'installation et ensuite monter ledit élément de mobilier sur place par ses propres moyens. Chaque consommateur ou client peut ainsi concevoir, via une application mobile dédiée et en fonction de paramètres déterminés, tels que, non limitativement, la hauteur et/ou la largeur souhaitées, commander et assembler son propre élément de mobilier au gré de ses envies et/ou contraintes en lien avec son habitation. En outre, les éléments de mobilier proposés par ladite société ne requièrent pas le concours d'outils spécifiques ou dédiés à leurs assemblages. En effet, les différentes pièces ou différents modules sont des formes sensiblement équivalentes à des pavés ou parallélépipèdes rectangles, de tels pavés constituant les parois et plateaux et composant les éléments de mobilier, et comportent en leur sein un ou plusieurs dispositifs d'assemblage. De tels dispositifs d'assemblage consistent en des connecteurs clipsables, c'est-à-dire fixables au moyen d'une pince formant ressort, à code couleur, lesdits connecteurs ou plus généralement dispositifs d'assemblage étant avantageusement invisibles une fois montés.

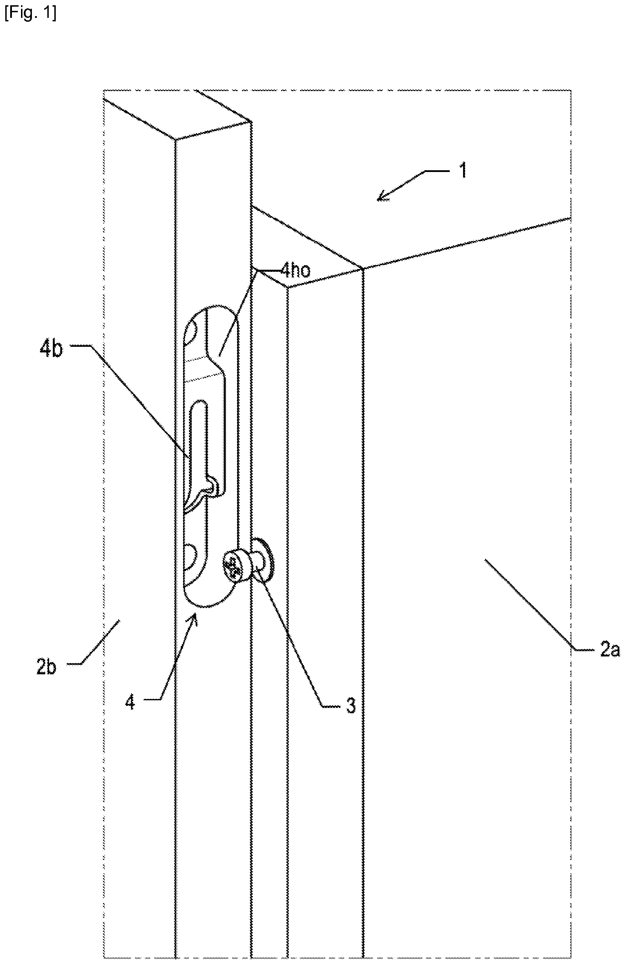

La figure 1 présente schématiquement un exemple d'un système d'assemblage connu tel que mentionné précédemment. Un tel système d'assemblage 1 comprend avantageusement un élément mâle 3, sous la forme d'un ergot, compris au sein d'un premier module d'un élément de mobilier et un élément femelle 4, compris au sein d'un deuxième module d'un élément de mobilier, lesdits éléments mâle 3 et femelle 4 étant mutuellement agencés pour coopérer ensemble et assurer la fixation de deux pièces ou modules 2a, 2b. A ce titre, comme d'ores et déjà mentionnés, les pièces ou modules 2a, 2b coopèrent ou comprennent en leur sein avantageusement et respectivement de tels éléments mâle 3 et femelle 4. Pour ce faire, la pièce ou le module 2b comporte avantageusement un logement 4ho agencé pour accueillir une pince à ressort 4b, ladite pince à ressort 4b étant agencée pour elle-même accueillir l'ergot 3. Une fois l'ergot inséré dans ladite pince à ressort 4b, les deux pièces ou modules sont assemblés. L'emploi d'un tel système d'assemblage s'avère astucieux, puisqu'il permet la création d'éléments de mobilier sur mesure extrêmement simples à assembler, permettant d'optimiser l'espace du lieu d'installation desdits éléments de mobilier. Néanmoins, ces derniers, une fois montés, ne sont généralement pas ou très difficilement désassemblables ou démontables, de sorte qu'il est très difficile de les transporter et les monter sur un nouveau lieu d'installation ou encore de les transformer en un nouvel élément de mobilier. A l'instar des éléments de mobilier précédemment décrits, la personnalisation offerte par de tels éléments de mobilier est donc limitée aux choix offerts au moment de l'achat desdits éléments de mobilier via l'application mobile précédemment mentionnée.

Par ailleurs, les documents WO 98/58142, DE 10 2012 009035, US 2014/0190112, US2017/0360193 et WO 02/01018 divulguent des dispositifs d'assemblage d'éléments en bois, notamment pour du parquet, des panneaux de construction ou des meubles, qui mettent en œuvre un élément mâle et un élément femelle. Les éléments femelles sont des trous ou des rainures disposant d'une gorge située non loin de l'embouchure dudit trou ou rainure. Les éléments mâles sont d'une forme complémentaire de la forme des éléments femelles et disposent d'une butée faisant saillie afin de coopérer avec la gorge de de l'élément femelle. L'assemblage de l'élément male avec l'élément femelle se fait par enclipsage. De tels assemblages ne conviennent pas pour des meubles destinés à être montés et démontés. En effet, le maintien en position dépend principalement de la saillie et de la gorge. Pour assurer un bon maintien en position, il est nécessaire d'avoir une butée présentant une saillie importante dont le montage se fait « en force » ce qui risque d'endommager les pièces lors d'un démontage et de ce fait introduire un jeu important entre les pièces assemblées. Si par contre la butée faisant saillie est de petite taille le démontage est réalisable sans endommager les pièces mais le maintien en position n'est que peu assuré par la butée qui laisse une certaine mobilité entre les pièces. Ainsi, si les solutions présentées dans ces documents conviennent pour certaines applications, mais celles-ci ne conviennent pas pour des meubles modulaires susceptibles de subir plusieurs cycles de montage et démontage.

L'invention permet de répondre à tout ou partie des inconvénients soulevés par les solutions connues.

Lesdits dispositifs d'assemblage conformes à l'invention permettent ainsi d'assembler et désassembler rapidement et très facilement des pièces ou modules entre eux, de sorte à créer, modifier, voire même transformer des meubles ou objets de décoration en fonction des besoins ou souhaits d'un utilisateur ou propriétaire de ces derniers. Les éléments de mobilier sont ainsi modulables dans le temps et offrent, à leurs utilisateurs ou propriétaires, des possibilités d'utilisation et de personnalisation multiples.

Parmi les nombreux avantages apportés par l'invention, nous pouvons mentionner que celle-ci permet de :
- proposer un dispositif ou système d'assemblage solide, quasiment invisible, réversible, extrêmement facile d'utilisation et en conséquence à la portée de tout un chacun ;
- offrir un élément de mobilier modulable aux utilisations et personnalisations multiples, en fonction des envies et des besoins du consommateur ou encore du lieu d'implantation dudit élément de mobilier.

Selon un premier objet, il est notamment prévu un dispositif d'assemblage de premier et deuxième modules d'un élément de mobilier ou de construction, ledit dispositif comportant un élément femelle et un élément mâle destiné à coopérer avec l'élément femelle du premier module selon une liaison encastrement, ledit élément femelle présentant une rainure disposant d'une paroi interne comprenant plusieurs zones d'appui. Pour proposer un dispositif d'assemblage conforme à l'invention solide, quasiment invisible, réversible, extrêmement facile d'utilisation et en conséquence à la portée de tout un chacun, l'élément mâle dudit dispositif d'assemblage comporte un corps longitudinal, comportant des première et deuxième portions et présentant des première et deuxième parois latérales et des parois supérieure et inférieure, la première portion du corps comportant une butée faisant saillie et s'étendant longitudinalement le long d'un axe longitudinal de la première paroi latérale, ladite paroi inférieure présentant deux chanfreins. Par ailleurs, la forme et les dimensions de la première portion du corps de l'élément mâle sont déterminées pour être complémentaires et ajustées à celle de la rainure de l'élément femelle du premier module, de sorte que la butée, les chanfreins et la paroi inférieure prennent appui sur la paroi interne de ladite rainure lors de l'emboitement de l'élément mâle dans l'élément femelle dudit premier module.

Ainsi, lorsque l'élément mâle est inséré dans l'élément femelle, plusieurs zones d'appui de l'élément femelle sont en contact avec l'élément mâle et permettent ainsi de garantir un maintien en position dans plusieurs directions sans solliciter la butée. La butée peut de ce fait être de taille réduite autorisant un démontage facile non destructeur grâce à l'appui de l'élément mâle sur les zones de contact de l'élément femelle qui participe au maintien en position du dispositif d'assemblage selon l'invention.

Selon un premier mode de réalisation non limitatif d'un dispositif d'assemblage conforme à l'invention, les première et deuxième parois latérales du corps de la première portion de l'élément mâle dudit dispositif d'assemblage peuvent être incurvées selon une même direction, la première portion de la deuxième paroi latérale prenant appui sur la paroi interne de la rainure de l'élément femelle du premier module lors de l'emboitement de l'élément mâle dans l'élément femelle dudit premier module.

En variante, selon un deuxième mode de réalisation non limitatif d'un dispositif d'assemblage conforme à l'invention, les première et deuxième parois latérales de la première portion du corps de l'élément mâle dudit dispositif peuvent être sensiblement planes ou rectilignes, la première portion du corps comportant en outre une deuxième butée faisant saillie et s'étendant longitudinalement le long d'un axe longitudinal de la deuxième paroi latérale, la deuxième butée étant agencée pour prendre appui de manière réversible sur la paroi interne de ladite rainure lors de l'emboitement de l'élément mâle dans l'élément femelle dudit premier module.

En variante ou en complément, pour faciliter la mise en œuvre d'un dispositif d'assemblage conforme à l'invention, celui-ci peut comporter un deuxième élément femelle dans le deuxième module, le deuxième élément femelle comprenant une rainure identique à la rainure du premier élément femelle. La paroi supérieure du corps de l'élément mâle peut présenter deux chanfreins et une deuxième portion du corps de l'élément mâle peut comprendre deux épaulements faisant saillie par rapport aux premières et deuxième parois latérales. En outre, les chanfreins et les épaulements de la deuxième portion du corps peuvent être dimensionnés et ajustés pour prendre appui sur les parois internes de la deuxième rainure du deuxième élément femelle du deuxième module lors du coulissement de la deuxième portion de l'élément mâle dans l'élément femelle dudit deuxième module.

En variante ou en complément, un dispositif d'assemblage conforme à l'invention peut comporter au moins une vis, l'un des deux chanfreins de la paroi supérieure du corps de l'élément mâle comportant alors au moins un trou débouchant dans au moins l'une des première et deuxième parois latérales respectivement opposées audit au moins un des deux chanfreins, ledit au moins un trou étant taraudé et agencé pour accueillir ladite vis.

Selon un troisième objet, l'invention concerne un élément de mobilier, comportant des premier et deuxième modules. Pour faciliter l'assemblage et le désassemblage d'un élément de mobilier conforme à l'invention, ce dernier comporte un dispositif d'assemblage conforme au premier objet de l'invention, et dans lequel le premier module comporte l'élément femelle et le deuxième module comporte l'élément male.

Afin d'offrir un élément de mobilier conforme à l'invention plus facilement modulable et personnalisable, ledit élément de mobilier peut comporter des premier et deuxième modules comprenant chacun un élément femelle. Un élément mâle dudit élément de mobilier peut coopérer également et solidairement avec l'élément femelle des premier et deuxième modules selon une liaison mécanique encastrement réversible.

Préférentiellement mais non limitativement, un élément de mobilier conforme à l'invention peut être sélectionné parmi un élément de rangement, une étagère suspendue ou sur pieds, une armoire, un chiffonnier, une bibliothèque, une commode, une table, une console ou encore un bar.

D'autres caractéristiques et avantages apparaîtront plus clairement à la lecture de la description qui suit et à l'examen des figures qui l'accompagnent parmi lesquelles :
[Fig.1], précédemment décrite, présente un exemple de réalisation d'un système d'assemblage pour élément de mobilier connu ;
[Fig.2A] présente schématiquement une vue en coupe transversale d'un élément mâle d'un premier exemple de réalisation non limitatif d'un dispositif d'assemblage pour élément de mobilier conforme à l'invention ;
[Fig.2B] présente schématiquement une vue en perspective d'un élément mâle d'un premier exemple de réalisation non limitatif d'un dispositif d'assemblage pour élément de mobilier conforme à l'invention ;
[Fig.2C] présente schématiquement une vue en perspective d'un premier exemple de réalisation non limitatif d'un dispositif d'assemblage pour élément de mobilier conforme à l'invention, lorsque ledit dispositif est inséré au sein d'une rainure d'un élément femelle d'un premier module ;
[Fig.2D] présente schématiquement une vue en perspective d'un premier exemple de réalisation non limitatif d'un dispositif d'assemblage pour élément de mobilier conforme à l'invention, lorsque ledit dispositif est enchâssé au sein de deux rainures respectives de deux éléments femelles respectifs de premier et deuxième modules ;
[Fig.3A] présente schématiquement une vue en coupe transversale d'un élément mâle d'un deuxième exemple de réalisation non limitatif d'un dispositif d'assemblage pour élément de mobilier conforme à l'invention ;
[Fig.3B] présente schématiquement une vue en perspective d'un élément mâle d'un deuxième exemple de réalisation non limitatif d'un dispositif d'assemblage pour élément de mobilier conforme à l'invention ;
[Fig.3C] présente schématiquement une vue en perspective d'un deuxième exemple de réalisation non limitatif d'un dispositif d'assemblage pour élément de mobilier conforme à l'invention, lorsque ledit dispositif est inséré au sein d'une rainure d'un élément femelle d'un premier module ;
[Fig.3D] présente schématiquement une vue en perspective d'un deuxième exemple de réalisation non limitatif d'un dispositif d'assemblage pour élément de mobilier conforme à l'invention, lorsque ledit dispositif est enchâssé au sein de deux rainures respectives de deux éléments femelles respectifs de premier et deuxième modules ;
[Fig.4A] présente schématiquement une vue en coupe transversale d'un élément mâle d'un dispositif d'assemblage pour élément de mobilier non conforme à l'invention;
[Fig.4B] présente schématiquement une vue en perspective d'un élément mâle d'un dispositif d'assemblage pour élément de mobilier non conforme à l'invention;
[Fig.4C] présente schématiquement une vue en perspective d'un dispositif d'assemblage pour élément de mobilier non conforme à l'invention, lorsque ledit dispositif est inséré au sein d'une rainure d'un élément femelle d'un premier module ;
[Fig.4D] présente schématiquement une vue en perspective d'un dispositif d'assemblage pour élément de mobilier non conforme à l'invention, lorsque ledit dispositif est enchâssé au sein de deux rainures respectives de deux éléments femelles respectifs de premier et deuxième modules ;
[Fig.5A] présente schématiquement une vue en coupe d'un élément femelle d'un exemple non limitatif de réalisation d'un module d'un élément de mobilier conforme à l'invention ;
[Fig.5B] présente schématiquement une vue en perspective selon un premier angle de vue d'un élément femelle d'un exemple non limitatif de réalisation d'un module d'un élément de mobilier conforme à l'invention ;
[Fig.5C] présente schématiquement une vue en perspective selon un deuxième angle de vue d'un élément femelle d'un exemple non limitatif de réalisation d'un module d'un élément de mobilier conforme à l'invention ;
[Fig.6A] présente schématiquement une vue en perspective selon un premier angle de vue d'un premier exemple de réalisation non limitatif d'un module d'un élément de mobilier d'un conforme à l'invention ;
[Fig.6B] présente schématiquement une vue en perspective selon un deuxième angle de vue d'un premier exemple de réalisation non limitatif d'un module d'un élément de mobilier conforme à l'invention ;
[Fig.6C] présente schématiquement une vue de face d'un premier exemple de réalisation non limitatif de deux modules d'un élément de mobilier conforme à l'invention, lors de leur assemblage par un dispositif d'assemblage conforme à l'invention ;
[Fig.7A] présente schématiquement une vue en perspective selon un premier angle de vue d'un deuxième exemple de réalisation non limitatif d'un module d'un élément de mobilier conforme à l'invention ;
[Fig.7B] présente schématiquement une vue en perspective selon un deuxième angle de vue d'un deuxième exemple de réalisation non limitatif d'un module d'un élément de mobilier conforme à l'invention ;
[Fig.7C] présente schématiquement une vue de face d'un deuxième exemple de réalisation non limitatif de deux modules d'un élément de mobilier conforme à l'invention, lors de leur assemblage par un dispositif d'assemblage conforme à l'invention.

Un dispositif d'assemblage conforme à l'invention sera décrit, dans la suite du document, dans le cadre d'une application en lien avec un élément de mobilier sous la forme d'étagères. Toutefois, l'invention ne saurait être limitée à ce seul exemple de réalisation. En variante, un tel dispositif d'assemblage pourrait être en lieu et place être employée en lien avec tout élément ou objet modulable que l'on souhaite aisément pouvoir assembler et/ou désassembler, tel que, par exemple, des étagères combinées multifonctions, des cloisons de séparation de pièces, des vitrines en devanture de magasins, des panneaux muraux éventuellement décoratifs ou encore des encadrements de portes. Plus généralement, un tel dispositif d'assemblage pourrait également être utilisé en lien avec des cabanes et maisons en kit, constituées éventuellement et principalement en bois ou tout autre matériau de construction. Au sens de l'invention et dans tout le document, on entend par « assemblage », l'union et la jonction, éventuellement réversibles, de premier et deuxième modules d'un élément de mobilier.

Ainsi, un tel dispositif d'assemblage est avantageusement agencé pour assurer l'assemblage et le maintien pérenne par emboitement et/ou embrèvement de premier et deuxième modules d'un élément de mobilier, de tels assemblage et maintien étant avantageusement réversibles, sans pour autant requérir au concours d'outils ou appareils supplémentaires. Au sens de l'invention et dans tout le document, on entend par « emboîtement », l'assemblage ou la jonction de deux pièces, en l'espèce un élément mâle d'un dispositif d'assemblage et un élément femelle d'un module, qui se recouvrent l'une sur l'autre complètement ou partiellement. Également, toujours au sens de l'invention et dans tout le document, on entend par « embrèvement », un assemblage de deux pièces, en l'espèce un élément mâle d'un dispositif d'assemblage et un élément femelle d'un module, ledit élément mâle comportant la languette ou le tenon destiné à s'emmancher dans la rainure ou la mortaise dudit élément femelle.

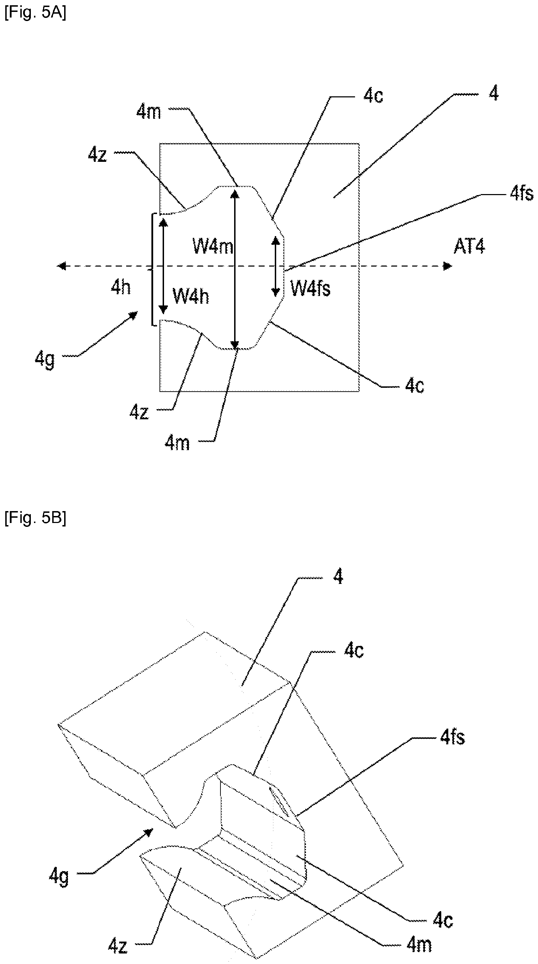

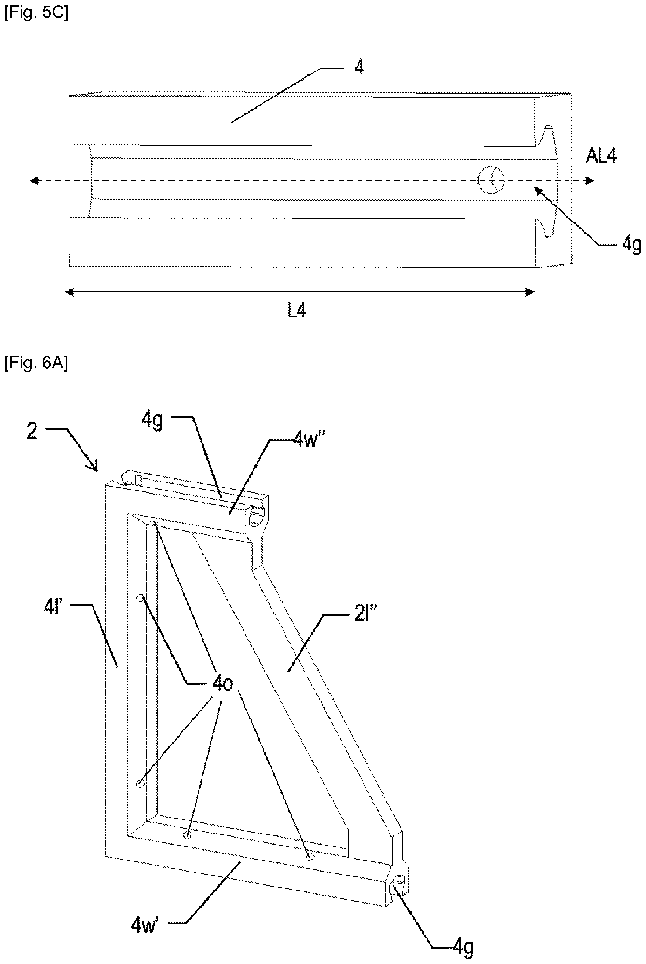

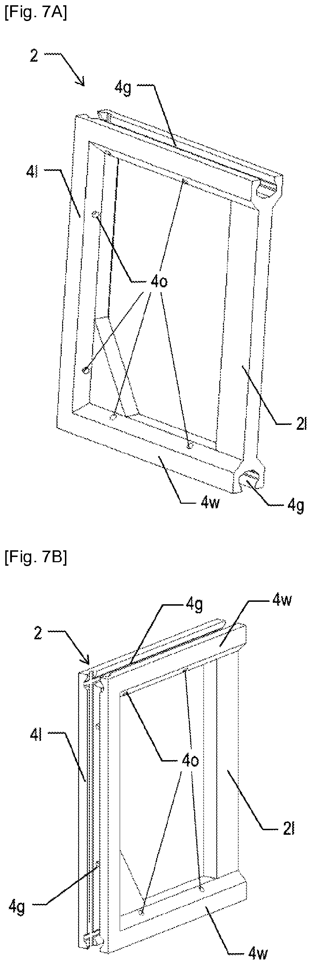

A cet effet, les premier et/ou le deuxième modules présentent un ou plusieurs éléments femelles agencés pour accueillir et coopérer avec un ou plusieurs dispositifs d'assemblage conformes à l'invention, de tels éléments femelles pouvant alors présenter des rainures 4g, telles qu'elles seront décrites dans la suite du document en lien avec les figures 5A à 5C. Au sens de l'invention et dans tout le document, on entend par « rainure », toute entaille ou encoche généralement longue et étroite pratiquée, dans l'épaisseur d'un module, et agencée ou destinée à servir à des assemblages ou à recevoir des parties coulissantes, ladite rainure présentant une forme et des dimensions complémentaires, ajustées et déterminées pour coopérer avec un dispositif d'assemblage conforme à l'invention. Les figures 5A à 5C présentent schématiquement différentes vues d'un élément femelle d'un exemple non limitatif de réalisation d'un module d'un élément de mobilier conforme à l'invention. Des exemples de réalisation non limitatifs d'un module d'un élément conforme à l'invention seront décrits ultérieurement dans le document avec les figures 6A à 6C et 7A à 7C.

Selon les figures 5A à 5C, un élément femelle présente une rainure 4g, dont les dimensions et la forme sont agencées pour accueillir tout ou partie d'un élément mâle d'un dispositif d'assemblage conforme à l'invention. A cet effet, une telle rainure 4g peut s'étendre longitudinalement sur toute la longueur L4 de l'élément femelle 4 selon un axe longitudinal AL4. La rainure 4g définit ainsi une paroi interne 4z,4m,4c,4fs. Selon la figure 5A, la section transversale de la rainure 4g, définie par un plan perpendiculaire à l'axe longitudinal AL4 peut présenter une symétrie orthogonale selon un axe transversal AT4 avantageusement perpendiculaire à l'axe longitudinal AL4. Selon l'exemple de réalisation non limitatif d'un élément femelle décrit notamment en lien avec les figures 5A à 5C, ladite section transversale et/ou la rainure 4g dudit élement femelle 4,4' peuvent ainsi présenter préférentiellement mais non limitativement :
- une ouverture 4h agencée pour permettre l'insertion de tout ou partie d'un dispositif d'assemblage conforme à l'invention, ladite ouverture pouvant présenter une première largeur d'ouverture W4h ;
- deux zones d'élargissement maximal 4m, dont la largeur W4m de la rainure définie par de telles zones peut avantageusement mais non limitativement être supérieure à la première largeur d'ouverture W4h ;
- une zone de fond 4fs, en regard de l'ouverture 4h et limitant la course du dispositif d'assemblage lorsque celui-ci est inséré dans la rainure 4g, dont la largeur W4fs de la rainure définie par une telle zone de fond peut avantageusement mais non limitativement être inférieure à la première largeur d'ouverture W4h ;
- deux zones de maintien 4c, s'étendant respectivement de la zone de fond 4fs aux zones d'élargissement maximal 4m selon des plans obliques en direction de l'ouverture 4h ;
- deux zones de jonction 4z, s'étendant de l'ouverture 4h aux zones d'élargissement maximal 4m selon une courbe déterminée.

Les structures, plus particulièrement les formes et les dimensions, d'un élément mâle dudit dispositif d'assemblage et d'un élément femelle dudit module, sont mutuellement agencées pour être complémentaires et permettre l'emboitement ou l'embrèvement, avantageusement réversible, de l'élément mâle dans l'élément femelle.

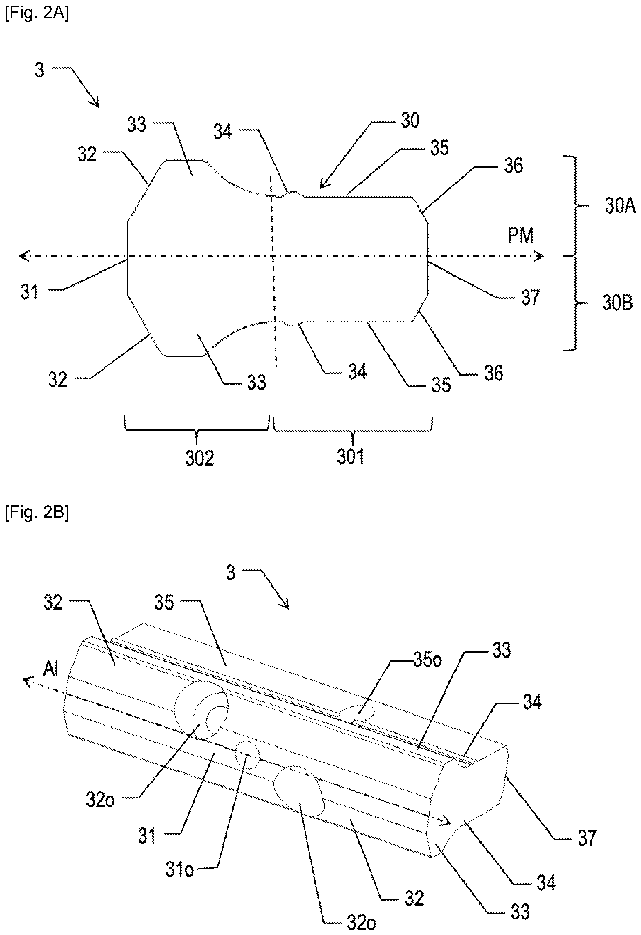

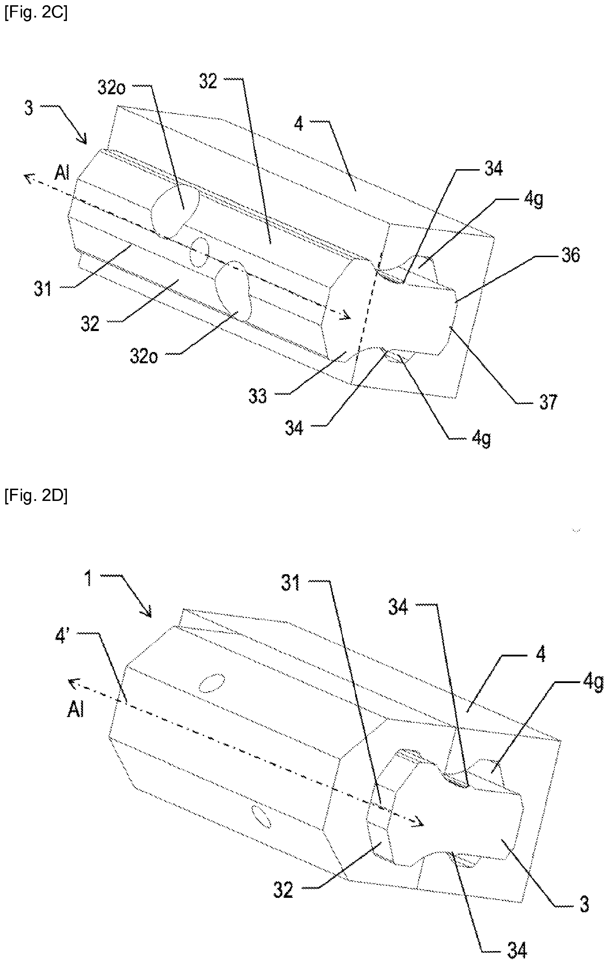

Les figures 2A et 2B présentent schématiquement et respectivement des vues en coupe et en perspective d'un élément mâle d'un premier exemple de réalisation non limitatif d'un dispositif d'assemblage pour élément de mobilier conforme à l'invention. La figure 2C présente schématiquement une vue en perspective d'un premier exemple de réalisation non limitatif d'un dispositif d'assemblage pour élément de mobilier conforme à l'invention, lorsque ledit dispositif est inséré au sein d'une rainure d'un élément femelle, après emboitement, éventuellement réversible, dudit dispositif d'assemblage au sein de ladite rainure. La figure 2D présente schématiquement une vue en perspective d'un premier exemple de réalisation non limitatif d'un dispositif d'assemblage pour élément de mobilier conforme à l'invention, lorsque ledit dispositif est enchâssé au sein de deux rainures respectives de deux éléments femelles de deux modules que l'on souhaite maintenir ensemble.

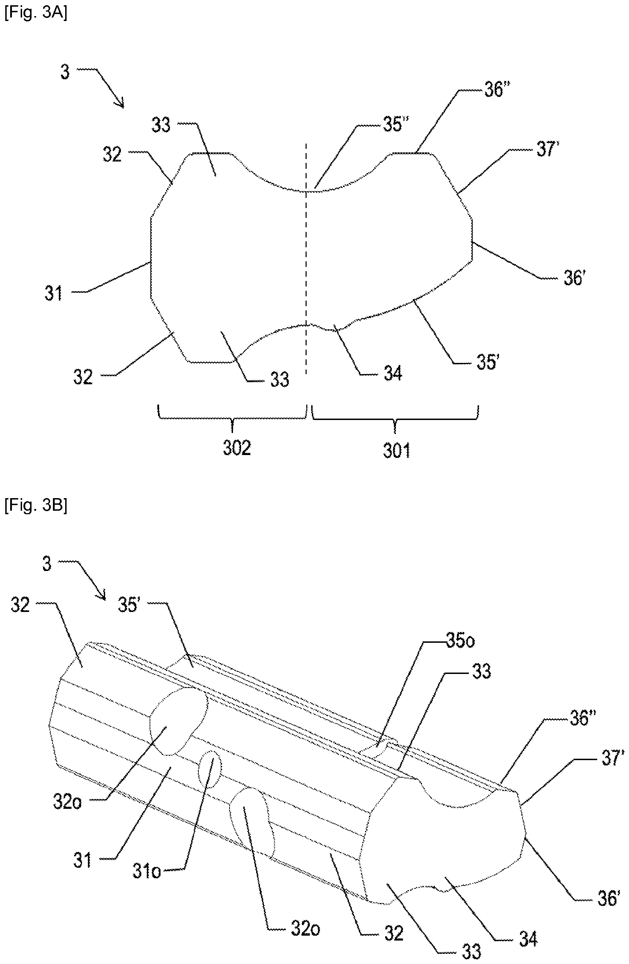

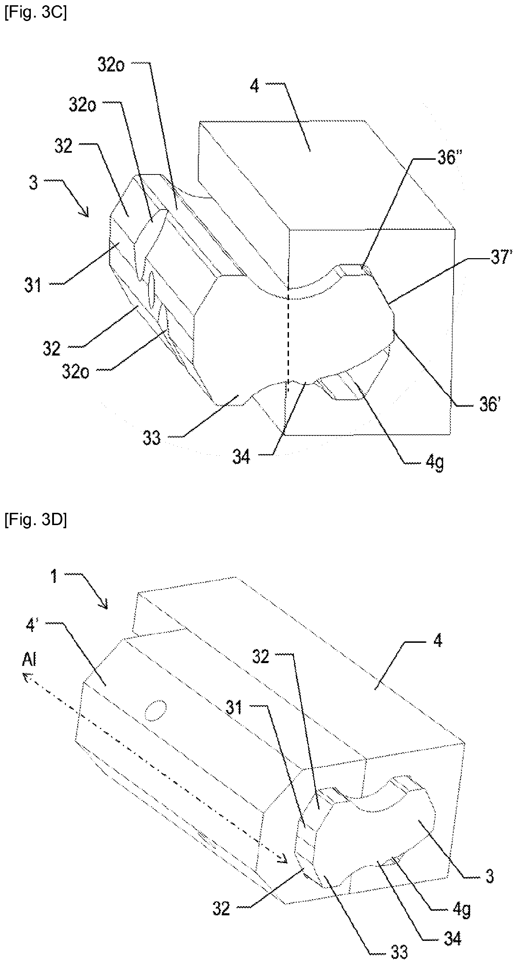

Les figures 3A et 3B présentent schématiquement et respectivement des vues en coupe et en perspective d'un élément mâle d'un deuxième exemple de réalisation non limitatif d'un dispositif d'assemblage pour élément de mobilier conforme à l'invention. La figure 3C présente schématiquement une vue en perspective d'un deuxième exemple de réalisation non limitatif d'un dispositif d'assemblage pour élément de mobilier conforme à l'invention, lorsque ledit dispositif est inséré au sein d'une rainure d'un élément femelle, après emboitement, éventuellement réversible, dudit dispositif d'assemblage au sein de ladite rainure. La figure 3D présente schématiquement une vue en perspective d'un deuxième exemple de réalisation non limitatif d'un dispositif d'assemblage pour élément de mobilier conforme à l'invention, lorsque ledit dispositif est enchâssé au sein de deux rainures respectives de deux éléments femelles de deux modules que l'on souhaite maintenir ensemble.

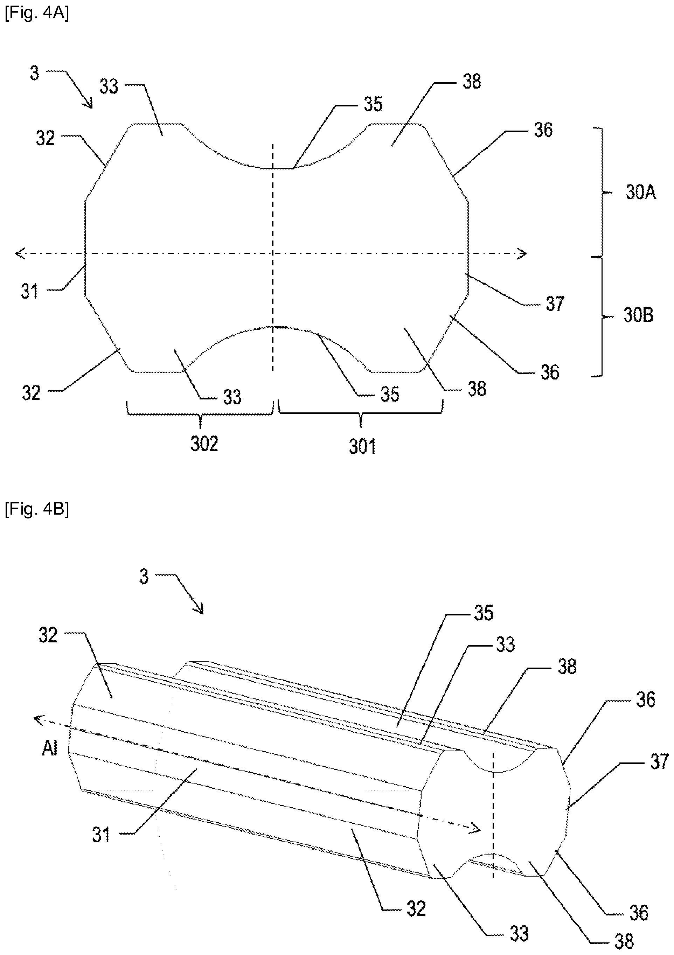

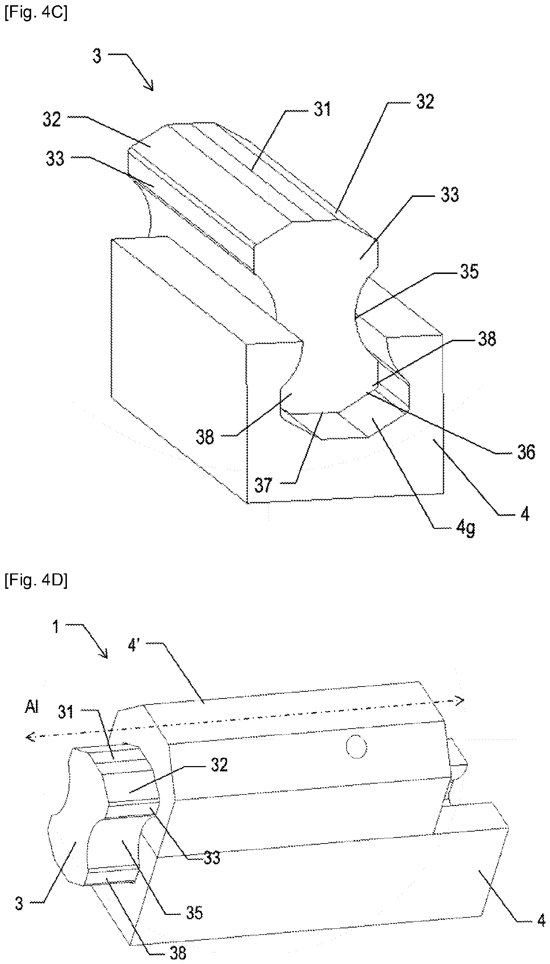

Les figures 4A et 4B présentent schématiquement et respectivement des vues en coupe et en perspective d'un élément mâle d'un dispositif d'assemblage pour élément de mobilier non conforme à l'invention. La figure 4C présente schématiquement une vue en perspective d'un dispositif d'assemblage pour élément de mobilier non conforme à l'invention, lorsque ledit dispositif est inséré au sein d'une rainure d'un élément femelle, après coulissement dudit dispositif d'assemblage au sein de ladite rainure. La figure 4D présente schématiquement une vue en perspective d'un dispositif d'assemblage pour élément de mobilier non conforme à l'invention, lorsque ledit dispositif est enchâssé au sein de deux rainures respectives de deux éléments femelles de deux modules que l'on souhaite maintenir ensemble.

Selon les figures 2A à 2D et 3A à 3D, un dispositif d'assemblage conforme à l'invention comporte un élément mâle 3 agencé pour coopérer avec un élément femelle 4 d'un premier module 2 selon une liaison encastrement, ledit élément femelle 4 présentant une rainure 4g. A cet effet, ledit élément mâle 3 comporte un corps 30 longitudinal, comportant des première et deuxième portions 301,302 et présentant des première et deuxième parois latérales 35,35',35" et des parois supérieure 31 et inférieure 37,37', lesdites parois supérieure 31 et inférieure 37,37' pouvant être respectivement comprises au sein des première et deuxième portions 301,302. L'invention prévoit en outre que le corps de l'élément mâle, ou plus généralement le dispositif d'assemblage, puisse comprendre plus de deux portions 301,302, de sorte à assurer l'assemblage de plus de deux modules. A titre d'exemples non limitatifs, un tel corps peut éventuellement comporter quatre portions, agencées pour assurer l'assemblage de quatre modules. Pour améliorer la solidité d'un dispositif d'assemblage conforme à l'invention, le corps de ce dernier peut avantageusement être plein, consistant en une pièce unique. Néanmoins, l'invention ne saurait être limitée à ce seul exemple de réalisation. En variante, l'invention prévoit que le corps 30 d'un dispositif d'assemblage conforme à l'invention puisse comporter une pluralité de pièces, lesdites pièces coopérant solidairement ensemble selon des liaisons encastrement.

Pour répondre aux contraintes en termes de résistance mécanique, de solidité et pérennité, un dispositif d'assemblage conforme à l'invention peut être constitué d'un ou plusieurs matériaux, tels que, à titre d'exemple préféré mais non limitatif, du bois, éventuellement teinté, puisque le bois est particulièrement apprécié dans le domaine des éléments de mobilier. Toutefois, l'invention ne saurait être limitée à ce seul exemple de matériau pour constituer ledit dispositif d'assemblage. En variante, l'invention prévoit que des métaux, tels que l'aluminium ou l'acier, ou encore des polymères de type plastique, comme par exemple, le HIPS (acronyme pour « High impact polystyrène), des résines, le PET (acronyme pour « polytéréphtalate d'éthylène ») ou encore l'ABS (acronyme pour « acrylonitrile butadiène styrène »), puissent être employés en lieu et place du bois pour constituer le dispositif d'assemblage.

De manière avantageuse, la paroi inférieure 37, 37' du corps 30 de l'élément mâle 3 présente avantageusement deux chanfreins 36, 36',36", de sorte à faciliter l'introduction de la première portion 301 du corps 30 de l'élément mâle 3 au sein de l'élément femelle 4 d'un module, plus particulièrement de sa rainure 4g, et d'améliorer la solidité dudit dispositif d'assemblage. A titre d'exemples non limitatifs, lesdits chanfreins 36,36',36" peuvent avantageusement présenter un angle par rapport à l'axe d'introduction compris entre vingt et quarante degrés, préférentiellement trente degrés.

Selon des premier et deuxième exemple de réalisation décrits respectivement en lien avec les figures 2A à 2D et 3A à 3D, la première portion 301, consistant en une première portion d'emboitement ou d'embrèvement, du corps 30 de l'élément mâle 3 d'un dispositif d'assemblage conforme à l'invention peut comporter une butée 34 faisant saillie. Une telle butée 34 consiste en une protubérance formant un point d'appui, permettant de maintenir le dispositif d'assemblage au sein d'une rainure 4g d'un élément femelle 4 d'un module 2 et de limiter ainsi le mouvement du dispositif d'assemblage 3 lorsque celui-ci est introduit au sein de ladite rainure 4g. Selon les figures 2A à 2D et 3A à 3D, pour faciliter la fabrication d'un dispositif d'assemblage conforme à l'invention, une telle butée 34 peut préférentiellement mais non limitativement, s'étendre longitudinalement le long d'un axe longitudinal Al de la première paroi latérale 35,35', sur toute la longueur de ladite première paroi latérale 35,35'. En variante (non représentée sur les figures à des fins de simplification), l'invention prévoit qu'une telle butée 34 puisse comporter un ou plusieurs ergots, de tels ergots étant disposés le long d'un axe longitudinal Al de la première paroi latérale 35,35'.

Pour faciliter l'assemblage d'un dispositif d'assemblage avec l'élément femelle 4 d'un module 2, la structure, plus particulièrement la forme et les dimensions, du corps 30, notamment la première portion 301, de l'élément mâle 3 sont déterminées pour être complémentaires et ajustées à celle de la rainure 4g, notamment la paroi interne de l'élément femelle 4 d'un module 2. Ainsi, la butée 34 et les chanfreins 36,36',36" de la paroi inférieure 37,37' sont agencés pour prendre appui, préférentiellement de manière réversible, sur la paroi interne 4z, 4m, 4c, 4fs de ladite rainure 4g lors de l'emboitement de la première portion 301 de l'élément mâle 3 dans l'élément femelle 4 d'un module 2 : la première portion 301 du corps 30 est alors avantageusement insérée et enchâssée, c'est-à-dire fixée, dans la rainure 4g. La butée 34, lorsque le dispositif d'assemblage est emboité ou embrevé dans la rainure 4g, prend appui contre la paroi interne 4z de la rainure 4g à proximité du bord ou de l'ouverture 4h de la rainure 4g. Pour ce faire, conformément notamment à un exemple non limitatif d'un élément femelle décrit notamment en lien avec les figures 5A à 5D, une rainure 4g dudit élément femelle 4 définit un logement agencé pour recevoir, par exemple, la première portion 301 dudit corps 30 du dispositif d'assemblage. La paroi interne de la rainure 4g définit différentes zones géométriquement correspondantes à celles de la première portion 301 du corps 30 du dispositif d'assemblage, de telles zones ayant été préalablement décrites, notamment en lien avec les figures 5A à 5C. Par ailleurs, pour faciliter l'introduction du dispositif d'assemblage au sein de ladite rainure 4g, la paroi inférieure 37,37' peut avantageusement présenter une surface sensiblement plane, disposée entre les chanfreins 36,36',36" pour prendre appui sur d'autres zones 4m, 4c, 4fs de la paroi interne.

Selon un premier exemple de réalisation non limitatif d'un dispositif d'assemblage conforme à l'invention décrit notamment en lien avec les figures 2A à 2D, pour faciliter l'insertion du dispositif d'assemblage au sein de la rainure 4g et proposer un assemblage de premier et deuxième modules facilité, à la portée de tout à chacun, les première et deuxième parois latérales 35 de la première portion 301 du corps 30 de l'élément mâle 3 peuvent être sensiblement planes ou rectilignes. Dans cet exemple, la paroi inférieure 37 est destinée à venir en contact avec la zone de fond 4fs et les deux chanfreins 36 sont destinés à venir en contact avec les deux zones de maintien 4c. La mise en contact de la partie inférieur 37 et des chanfreins 36 permet d'assurer un maintien en position supplémentaire qui permet de décharger en partie le maintien en position assuré par la butée 34. Selon ce cas de figure, pour améliorer le maintien d'un dispositif d'assemblage conforme à l'invention, la première portion 301 du corps 30 de ce dernier, consistant en une première portion d'emboitement ou d'embrèvement, peut en outre comporter une deuxième butée 34 faisant saillie. A l'instar de la première butée décrite précédemment, une telle deuxième butée 34 peut consister en une protubérance formant un point d'appui, permettant de maintenir le dispositif d'assemblage au sein d'une rainure 4g d'un élément femelle 4 d'un module 2 et de limiter ainsi le mouvement du dispositif d'assemblage 3 lorsque celui-ci est introduit au sein de ladite rainure 4g, la symétrie ainsi obtenue permet un meilleur contact au niveau de la zone de fond 4fs et des zones de maintien 4c.

Selon les figures 2A à 2D, pour faciliter la fabrication d'un dispositif d'assemblage conforme à l'invention, une telle deuxième butée 34 de ce dernier peut préférentiellement mais non limitativement, s'étendre longitudinalement le long d'un axe longitudinal Al de la deuxième paroi latérale 35, sur toute la longueur de ladite deuxième paroi latérale 35. En variante (non représentée sur les figures à des fins de simplification), l'invention prévoit qu'une telle deuxième butée 34 puisse comporter un ou plusieurs ergots, de tels ergots étant disposés le long d'un axe longitudinal Al de la deuxième paroi latérale 35. Comme d'ores et déjà mentionné, pour optimiser l'assemblage d'un dispositif d'assemblage avec un module 2, la structure, plus particulièrement la forme et les dimensions, du corps 30, notamment la première portion 301, de l'élément mâle 3 sont déterminées pour être complémentaires et ajustées à celle de la rainure 4g, notamment la paroi interne de l'élément femelle 4 du premier module 2. Ainsi, la deuxième butée 34 peut également et concomitamment à la première butée prendre appui de manière réversible sur la paroi interne 4z de ladite rainure 4g lors de l'emboitement de la première portion 301 de l'élément mâle 3 dans l'élément femelle 4 dudit premier module 2 : la première portion 301 du corps 30 est alors avantageusement insérée et enchâssée, c'est-à-dire fixée, préférentiellement de manière réversible, dans la rainure 4g. A l'instar de la première butée décrite précédemment, la deuxième butée 34, lorsque le dispositif d'assemblage est embrevé ou emboité dans la rainure 4g, prend appui contre la paroi interne 4z de la rainure 4g à proximité de l'ouverture 4h de la rainure 4g. Selon les figures 2A à 2D, pour faciliter la fabrication et l'installation d'un dispositif d'assemblage conforme à l'invention, ce dernier peut avantageusement présenter une symétrie orthogonale par rapport à un plan médian, c'est-à-dire plan médian » PM, tout plan normal notamment au corps, qui sépare une moitié 30A d'une moitié 30B du corps 30 du dispositif d'assemblage, lesdites moitiés étant sensiblement égales.

En variante, selon un deuxième exemple de réalisation non limitatif d'un dispositif d'assemblage conforme à l'invention décrit notamment en lien avec les figures 3A à 3D, pour proposer un assemblage plus solide et plus robuste, tout en s'affranchissant de l'emploi de tout outil ou objet complémentaire pour assurer le montage et l'assemblage de premier et deuxième modules, les première et deuxième parois latérales 35',35" de la première portion 301, consistant en la première portion d'emboitement, du corps 30 de l'élément mâle 3 d'un dispositif d'assemblage conforme à l'invention peuvent être incurvées selon une même direction. Les première et deuxième parois latérales 35',35" de la première portion 301 du corps 30 peuvent ainsi présenter des profils courbes complémentaires. Ainsi, la deuxième paroi latérale 35" de la première portion 301, à l'instar de la butée 34, ainsi que les chanfreins 36',36" et la paroi inférieure 37', peuvent être agencés, de par leur formes et leurs dimensions, pour prendre appui, préférentiellement de manière réversible, sur la paroi interne 4z, 4m, 4c, 4fs de la rainure 4g de l'élément femelle 4 d'un module 2 lors de l'emboitement ou de l'embrèvement de la première portion 301 de l'élément mâle 3 dans l'élément femelle 4 dudit premier module 2. Plus particulièrement, la paroi inférieure 37' est destinée à venir en contact avec une des zones de maintien 4c et les deux chanfreins 36' et 36" sont destinés à venir en contact avec l'une des deux zones d'élargissement maximal 4m et la zone de fond 4fs. La mise en contact de la partie inférieur 37' et des chanfreins 36' et 36" permet d'assurer un maintien en position supplémentaire qui permet de décharger en partie le maintien en position assuré par la butée 34. Comme d'ores et déjà mentionné, pour optimiser l'assemblage d'un dispositif d'assemblage avec un module 2, la structure, plus particulièrement la forme et les dimensions, du corps 30, notamment la première portion 301, de l'élément mâle 3 sont déterminées pour être complémentaires et ajustées à celle de la rainure 4g, notamment la paroi interne de la rainure 4g de l'élément femelle 4. Ainsi, la première portion de la deuxième paroi latérale 35" peut également et concomitamment prendre appui de manière réversible sur la paroi interne, notamment au niveau de la zone de jonction 4z, de ladite rainure 4g lors de l'emboitement de la première portion 301 de l'élément mâle 3 dans l'élément femelle 4 dudit premier module 2 : la première portion 301 du corps 30 est alors avantageusement insérée et enchâssée, c'est-à-dire fixée, dans la rainure 4g.

Selon un exemple d'un dispositif d'assemblage non conforme à l'invention décrit notamment en lier avec les figures 4A à 4D, pour proposer un assemblage facilitée par le coulissement dudit dispositif d'assemblage au sein d'une ou plusieurs rainures 4g respectives d'un ou plusieurs éléments femelles 4, la première portion 301, consistant en une première portion de coulissement, d'un dispositif d'assemblage peut comprendre deux épaulements 38 faisant saillie des premières et deuxième parois latérales 35. Lesdits deux épaulements 38 peuvent consister respectivement en deux protubérances formant deux surfaces d'appui, permettant de maintenir le dispositif d'assemblage au sein d'une rainure 4g d'un élément femelle 4 d'un module 2 et de limiter ainsi le mouvement du dispositif d'assemblage 3 lorsque celui-ci est introduit au sein de ladite rainure 4g. Selon les figures 4A à 4D, pour faciliter la fabrication d'un dispositif d'assemblage, de tels épaulements 38 de ce dernier peuvent préférentiellement mais non limitativement, s'étendre longitudinalement le long d'un axe longitudinal Al des première et deuxième parois latérales 35, sur toute la longueur desdites première et deuxième parois latérales 35. Comme d'ores et déjà mentionné, pour optimiser l'assemblage d'un dispositif d'assemblage avec l'élément femelle d'un module 2, la structure, plus particulièrement la forme et les dimensions, du corps 30, notamment la première portion 301, de l'élément mâle 3 sont déterminées pour être complémentaires et ajustées à celle de la rainure 4g, notamment la paroi interne de l'élément femelle 4 du premier module 2. Ainsi, les épaulements 38, à l'instar des chanfreins 36 et de la paroi inférieur 37, peuvent également et concomitamment être agencés, de sorte à prendre appui de manière réversible sur la paroi interne de ladite rainure 4g lors du coulissement de la première portion 301 de l'élément mâle 3 dans l'élément femelle 4 dudit premier module 2 : la première portion 301 du corps 30 est alors avantageusement insérée par coulissement dans la rainure 4g, les formes et dimensions de la première portion 301 du corps 30 étant avantageusement correspondantes et ajustées à celles de la rainure 4g.

Éventuellement, l'orientation dans l'espace d'un dispositif d'assemblage et l'orientation longitudinale de la rainure 4g d'un module 2 peuvent être verticales au regard d'un référentiel terrestre, lorsque le module et le dispositif d'assemblage sont destinés à être employés par exemple pour former une étagère murale. Selon cet exemple non limitatif, les première et deuxième portions 301 et 302 de l'élément mâle 3 d'un dispositif d'assemblage conforme à l'invention peut éventuellement subir un mouvement de translation par coulissement au sein des rainures 4g des premier et deuxième modules. Pour pallier cet inconvénient, l'invention prévoit qu'un dispositif d'assemblage puisse comprendre des moyens de fixation supplémentaires, de sorte à bloquer un tel mouvement de translation par rapport à l'une des rainures. A titre d'exemples non limitatifs, de tels moyens de fixation peuvent consister en une ou plusieurs vis ou tiges filetés, le corps 30, notamment la deuxième portion 302, pouvant alors définir un ou plusieurs trous respectifs 31o, éventuellement taraudés débouchant dans la rainure 4g et prenant appui sur la rainure 4g, permettant ainsi de limiter la course par coulissement de la première ou deuxième portion 301 ou 302 de l'élément mâle 3 du dispositif d'assemblage au sein de la rainure 4g du premier ou du deuxième module.

Comme mentionné préalablement, l'un des buts de l'invention consiste à assembler et maintenir solidaires des premier et deuxième modules d'un élément de mobilier. Conformément à l'invention, un tel assemblage et un tel maintien est avantageusement réalisé au moyen d'un dispositif d'assemblage conforme à l'invention. L'assemblage de la première portion 301 du corps 30 d'un dispositif d'assemblage et d'une rainure 4g d'un premier module 2 a été préalablement décrit au travers de différents exemples de réalisation de la première portion 301 du corps 30 de l'élément mâle dudit dispositif d'assemblage, de tels exemples de réalisation ayant été décrits notamment en lien avec les figures 2A à 2D et 3A à 3D.

Décrivons à présent et plus en détail l'assemblage de la deuxième portion 302 du corps 30 d'un dispositif d'assemblage et d'une rainure 4g d'un deuxième module 2, au travers d'un exemple non limitatif de réalisation d'une telle deuxième portion 302. L'invention prévoit notamment un agencement particulier et astucieux pour faciliter le maintien du dispositif d'assemblage au sein de la deuxième rainure 4g du deuxième module et ainsi éviter la perte dudit module. L'invention ne saurait toutefois être limitée à ce seul exemple de réalisation. L'invention prévoit notamment en variante que les agencements des premières portions 301 des premier et deuxième exemples de réalisation d'un dispositif d'assemblage conforme à l'invention, décrits notamment et respectivement en lien avec les figures 2A à 2D et 3A à 3D, puissent être exploités pour réaliser la deuxième portion 302 du corps 30 du dispositif d'assemblage. Selon les figures 2A à 2D et 3A à 3D, la paroi supérieure 31, à l'instar de la paroi inférieure 37, du corps 30 d'un dispositif d'assemblage conforme à l'invention peut également présenter deux chanfreins 32, de sorte à faciliter l'introduction du corps 30, plus particulièrement de la deuxième portion 302, de l'élément mâle 3 au sein de l'élément femelle 4', plus particulièrement de sa rainure 4g, et d'améliorer la solidité dudit dispositif d'assemblage. A titre d'exemples non limitatifs, lesdits chanfreins 32 peuvent avantageusement présenter un angle par rapport à l'axe d'introduction compris entre vingt et quarante degrés, préférentiellement trente degrés.

Par ailleurs, la deuxième portion 302, consistant en une deuxième portion de coulissement, d'un dispositif d'assemblage conforme à l'invention peut comprendre deux épaulements 33 faisant saillie par rapport aux premières et deuxième parois latérales. Lesdits deux épaulements 33 peuvent consister respectivement en deux protubérances formant deux surfaces d'appui, permettant de maintenir le dispositif d'assemblage au sein d'une rainure 4g d'un élément femelle 4 d'un module 2 et de limiter ainsi le mouvement du dispositif d'assemblage 3 lorsque celui-ci est introduit au sein de ladite rainure 4g. Selon les figures 2A à 2D et 3A à 3D, pour faciliter la fabrication d'un dispositif d'assemblage conforme à l'invention, de tels épaulements 33 de ce dernier peuvent préférentiellement mais non limitativement, s'étendre longitudinalement le long d'un axe longitudinal Al des première et deuxième parois latérales 35, sur toute la longueur desdites première et deuxième parois latérales 35. Pour optimiser l'assemblage d'un dispositif d'assemblage avec un deuxième module 2, la structure, plus particulièrement la forme et les dimensions, du corps 30, notamment la deuxième portion 302, de l'élément mâle 3 peuvent être déterminées pour être complémentaires et ajustées à celle de la rainure 4g, notamment la paroi interne de l'élément femelle 4 du deuxième module 2. Ainsi, les épaulements 33 et les chanfreins 32, peuvent également et concomitamment être agencés, de sorte à prendre appui de manière réversible sur la paroi interne de ladite rainure 4g lors du coulissement de la deuxième portion 302 de l'élément mâle 3 dans l'élément femelle 4 dudit deuxième module 2 : la deuxième portion 302 du corps 30 est alors avantageusement insérée par coulissement dans la rainure 4g, les formes et dimensions de la deuxième portion 302 du corps 30 étant avantageusement correspondantes et ajustées à celles de la rainure 4g afin d'être en contact sur la totalité de la paroi interne 4z, 4m, 4c, 4fs.

Éventuellement, l'orientation dans l'espace d'un dispositif d'assemblage et l'orientation longitudinale de la rainure 4g d'un module 2 peuvent être verticales au regard d'un référentiel terrestre, lorsque le module et le dispositif d'assemblage sont destinés à être employés pour former une étagère murale. Selon cet exemple non limitatif, la deuxième portion 302 d'un dispositif d'assemblage conforme à l'invention peut éventuellement subir un mouvement de translation par coulissement au sein de la rainure 4g du deuxième module. Pour pallier cet inconvénient, l'invention prévoit qu'un dispositif d'assemblage puisse comprendre des moyens de fixation, de sorte à bloquer un tel mouvement de translation. De tels moyens de fixation supplémentaires peuvent n'être utilisée qu'une seule et unique fois pour assembler un dispositif d'assemblage dans une rainure 4g d'un module 2, permettant ainsi le maintien pérenne de la deuxième portion 302 au sein de ladite rainure 4g. A titre d'exemples non limitatifs, de tels moyens de fixation peuvent consister en une ou plusieurs vis ou tiges filetés, qualifiées de « vis centrale » le corps 30, notamment la première portion 301, pouvant alors définir un ou plusieurs trous respectifs 31o, éventuellement taraudés débouchant dans la rainure 4g et prenant appui sur la zone de fond de la rainure 4g du deuxième module, permettant ainsi de limiter la course par coulissement de la deuxième portion du dispositif d'assemblage au sein de la rainure 4g du deuxième module. L'élément mâle devient alors solidaire de la rainure par serrage, c'est-à-dire par pression de la vis sur la zone de fond 4fs. Il est à noter qu'un tel serrage n'a pas à être important car il ne sert qu'à un maintien relatif de l'élément mâle dans la rainure sur lequel aucune force liée à l'assemblage de deux modules n'est exercée. Afin d'éviter un serrage trop fort inutile qui pourrait endommager la rainure ou l'élément mâle, on utilisera une vis de serrage ayant une tête de vis adaptée à un chambrage réalisé dans l'élément mâle et dont la longueur sous tête est déterminée pour ne dépasser que de quelques dixièmes de millimètres de l'élément mâle lorsque la tête de vis est en contact avec le fond du chambrage.

Comme précisé précédemment, l'invention prévoit qu'un dispositif d'assemblage conforme à l'invention puisse être assemblé et maintenu au sein d'une rainure 4g d'un élément femelle d'un premier ou deuxième module, sans avoir recours à aucun outil ou moyen de fixation supplémentaire. Néanmoins, dans certains cas, comme mentionné précédemment, la deuxième portion 302 ou la première portion 301 du corps 30 d'un dispositif d'assemblage conforme à l'invention pourrait éventuellement subir une force allant dans une direction de déboitement du dispositif d'assemblage. Or la direction de déboitement ne doit pas subir de force supérieure à celle d'un déboitement. Pour pallier cet inconvénient, l'invention prévoit qu'un dispositif d'assemblage puisse comprendre des moyens de fixation supplémentaires, de sorte à bloquer un tel mouvement de déboitement. A titre d'exemples non limitatifs, de tels moyens de fixation peuvent consister en une ou deux vis (non représentées sur les figures à des fins de simplification), qualifiées de « vis obliques ». A cet effet, au moins l'un des deux chanfreins 32 de la deuxième portion 302 du corps 30 de l'élément mâle 3 comportent des trous 32o débouchant dans l'une des première et deuxième parois latérales 35, 35' respectivement opposées auxdits chanfreins 32, de tels trous 32o étant taraudés et agencés pour accueillir lesdites vis. La position et l'inclinaison des trous 32o est déterminée pour qu'une vis oblique débouchant sur une paroi latérale 35 ou 35' crée un obstacle au retrait de première partie 301 de la rainure dans laquelle celle-ci est engagée. L'utilisation d'une seule vis oblique est suffisante, toutefois, dans l'exemple des figures 2A à 2D, il est préférable d'utiliser deux vis obliques pour conserver une symétrie dans les efforts. Selon un mode de réalisation préféré, les trous 32o dispose d'un chambrage du côté des chanfreins 32 afin de permettre de loger les têtes des vis obliques. Le chambrage du trou 32o et la longueur de la vis oblique sont déterminés pour que, lorsque la tête de vis est en contact avec le fond du chambrage l'extrémité de la vis oblique dépasse de la paroi latérale 35 ou 35' de quelques millimètres pour venir effleurer la paroi de la zone de jonction 4z sans nécessairement la toucher, et lorsque l'extrémité de la vis est affleurant avec la paroi latérale, la tête de vis ne dépasse pas du chanfrein 32.

L'invention ne saurait toutefois être limitée à ce seul exemple de moyen de fixation et pourrait en lieu et place utiliser tout autre moyen de fixation adapté. A titre d'exemple, lorsque l'élément mâle, principalement utilisé pour un assemblage de deux modules disposant chacun d'une rainure, est conforme à l'exemple des figures 3A à 3D et que l'on dispose, lors de l'assemblage, d'un jeu de coulissement de quelques millimètres entre les deux modules, il est possible d'insérer un deuxième élément mâle similaire d'une longueur inférieure au jeu de coulissement positionné dans une direction différente de la position de l'élément mâle principale. Le deuxième élément mâle s'oppose alors au déboitement de l'élément male principal sans qu'il soit besoin d'utiliser de vis obliques.

Enfin, comme mentionné précédemment, l'invention concerne également un élément de mobilier, comportant des premier et deuxième modules 2. Préférentiellement mais non limitativement, pour faciliter le montage, l'assemblage et la formation d'un élément de mobilier conforme à l'invention, les différentes pièces ou différents modules d'un tel élément de mobilier peuvent présenter des formes sensiblement équivalentes à des pavés ou parallélépipèdes rectangles, éventuellement pleins, de telles pièces ou de tels modules constituant les parois et plateaux, ou plus généralement l'enveloppe et/ou les étagères d'un futur élément de mobilier. Lesdits premier et deuxième modules comportent avantageusement et respectivement chacun au moins un élément femelle 4, 4' présentant chacun une rainure 4g, ladite rainure 4g étant avantageusement agencée pour accueillir et assurer l'emboitement ou l'embrèvement d'un dispositif d'assemblage. Généralement, un élément de mobilier à monter soi-même comporte plus de deux modules. A cet effet, pour permettre le montage et la formation d'un élément de mobilier conforme à l'invention, chaque premier ou deuxième module peut avantageusement présenter une pluralité de rainures 4g avantageusement pratiquées sur une ou plusieurs parois latérales du premier ou deuxième module. Afin d'offrir un élément de mobilier modulable et personnalisable que l'on souhaite aisément pouvoir assembler et/ou désassembler, un tel élément de mobilier comporte en outre un dispositif d'assemblage 3 coopérant solidairement avec un élément femelle 4, plus particulièrement une rainure 4g, du premier ou deuxième module 2 selon une liaison mécanique encastrement réversible, ledit dispositif d'assemblage 3 étant conforme au premier objet de l'invention. Comme décrit précédemment, ledit dispositif d'assemblage, plus particulièrement sa première ou deuxième portion 301 ou 302, et la rainure 4g du premier ou deuxième module d'un élément de mobilier conforme à l'invention sont mutuellement agencés, de par leur forme et leurs dimensions, pour former une liaison encastrement réversible par emboitement ou embrèvement.

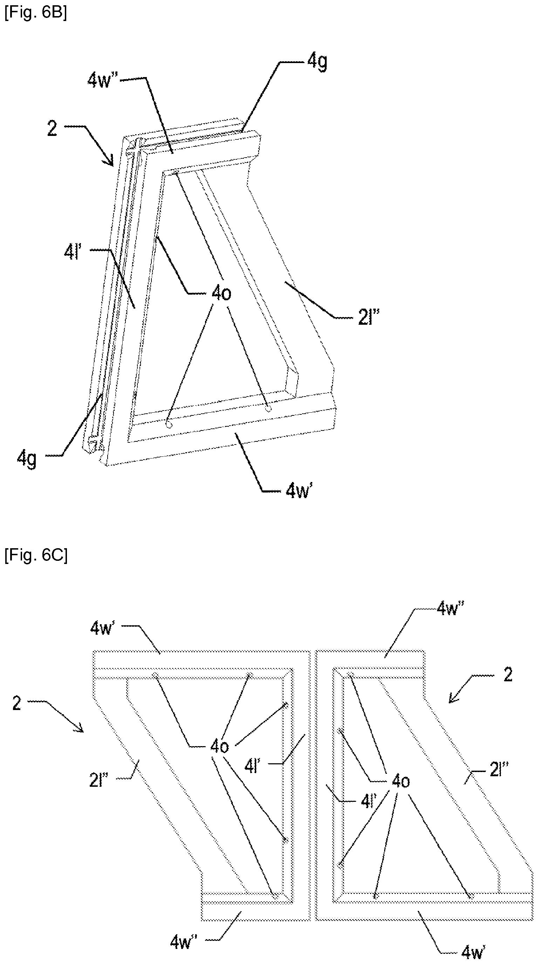

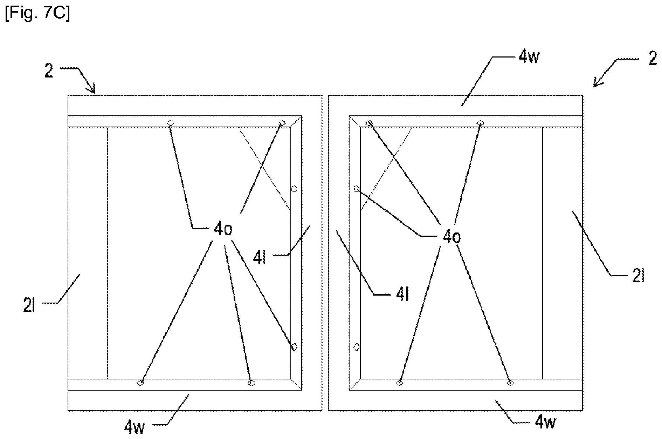

Les figures 6A et 6B présentent schématiquement et respectivement des vues en perspective selon deux angles de vue différents d'un premier exemple de réalisation non limitatif d'un module d'un élément de mobilier conforme à l'invention. Quant à elle, la figure 6C présente schématiquement une vue de face d'un premier exemple de réalisation non limitatif de premier et deuxième modules d'un élément de mobilier conforme à l'invention, lorsque ceux-ci sont assemblés par un dispositif d'assemblage conforme à l'invention. Les figures 7A et 7B présentent schématiquement et respectivement des vues en perspective selon deux angles de vue différents d'un deuxième exemple de réalisation non limitatif d'un module d'un élément de mobilier conforme à l'invention. Quant à elle, la figure 7C présente schématiquement une vue de face d'un deuxième exemple de réalisation non limitatif de premier et deuxième modules d'un élément de mobilier conforme à l'invention, lorsque ceux-ci sont assemblés par un dispositif d'assemblage conforme à l'invention. L'invention ne saurait toutefois être limitée à ces seuls exemples de réalisation de modules d'un élément de mobilier conforme à l'invention, que ce soit notamment en matière de dimensions et/ou de formes. En effet, l'invention prévoit que tout module de toute forme et/ou de toute dimension puisse être employé, pour autant qu'il présente une rainure 4g agencée pour coopérer, par emboîtement ou embrèvement, avec la première portion ou la deuxième portion du corps d'un dispositif d'assemblage conforme à l'invention. Préférentiellement mais non limitativement, pour faciliter l'assemblage et la constitution d'un élément de mobilier, les modules formant une paroi ou un plateau d'un élément de mobilier conforme à l'invention peuvent être dimensionnés et proportionnés en fonction du nombre d'or. Les proportions et le dimensionnement des différents modules d'un élément de mobilier en fonction du nombre d'or s'avèrent particulièrement intéressant, puisqu'il permet de créer des agencements harmonieux, sans pour autant nécessiter l'emploi de modules de dimensions identiques.

Selon les figures 6A et 6B, un premier ou deuxième module 2 d'un élément de mobilier conforme à l'invention peut présenter une forme sensiblement identique à un trapèze rectangle en trois dimensions, c'est-à-dire un prisme droit dont les bases sont un rectangle et un trapèze rectangle présentant ainsi six faces. Une telle forme peut être assimilable à une « harpe ». L'emploi d'un module sous la forme d'un tel trapèze rectangle en trois dimensions s'avère particulièrement avantageux, puisqu'il permet de concevoir différentes réalisations personnalisées et esthétiques, les modules étant ainsi facilement coordonnables, de par la présence d'une paroi latérale et/ou pièce en trois dimensions oblique 2l" sur chaque module 2, telle qu'illustré en figure 6C.

En outre, conformément aux figures 6A à 6C, pour permettre une personnalisation esthétique du ou des modules d'un élément de mobilier, le ou lesdits modules peuvent avantageusement définir une ouverture pratiquée entre les différentes parois latérales et/ou pièces en trois dimensions 4l',2l",4w',4w". Une telle ouverture peut avantageusement présenter, comme l'indiquent les figures 6A à 6C, une forme similaire à celle du volume du module ou en variante présenter toute forme adaptée, telle que, non limitativement, un cercle, demi-cercle ou encore triangle. Une telle ouverture peut, selon les envies et besoins, être éventuellement obturée. Par ailleurs, pour permettre de moduler à l'infini un élément de mobilier conforme à l'invention ou orienter selon les besoins ou les envies le module d'un élément de mobilier conforme à l'invention, préférentiellement mais non limitativement, tout ou partie des différentes parois latérales et/ou pièces en trois dimensions 4l',4w',4w" dudit module peuvent chacun consister en un élément femelle 4, présentant, à leur tour chacun et respectivement une rainure 4g, agencée pour accueillir une première ou deuxième portion 301 ou 302 d'un dispositif d'assemblage conforme au premier objet de l'invention.

Selon les figures 7A et 7B, un premier ou deuxième module 2 d'un élément de mobilier conforme à l'invention peut présenter une forme sensiblement identique à un parallélépipède rectangle. Une telle forme peut être assimilable à un pavé. L'emploi d'un module sous la forme d'un tel parallélépipède rectangle s'avère particulièrement avantageux, puisqu'il permet de concevoir différentes réalisations personnalisées, les modules étant ainsi facilement coordonnables, tels qu'illustrés en figure 7C. En outre, conformément aux figures 7A à 7C, pour permettre une personnalisation accrue du ou des modules d'un élément de mobilier, le ou lesdits modules peuvent avantageusement définir une ouverture pratiquée entre les différentes parois latérales et/ou pièces en trois dimensions 4l,2l,4w. Une telle ouverture peut avantageusement présenter, comme l'indiquent les figures 6A à 6C, une forme similaire à celle du volume du module ou en variante présenter toute forme adaptée, telle que, non limitativement, un cercle, demi-cercle ou encore triangle. Par ailleurs, pour permettre de moduler à l'infini un élément de mobilier conforme à l'invention ou orienter selon les besoins ou les envies le module d'un élément de mobilier conforme à l'invention, préférentiellement mais non limitativement, tout ou partie des différentes parois latérales et/ou pièces en trois dimensions 4l,4w dudit module peuvent chacun consister en un élément femelle 4 présentant, à leur tour chacun et respectivement une rainure 4g, agencée pour accueillir une première ou deuxième portion 301 ou 302 d'un dispositif d'assemblage conforme au premier objet de l'invention.

Comme précisé précédemment, l'un des objectifs de l'invention est de proposer un élément de mobilier dont l'assemblage et le maintien sont rendus possibles grâce à l'agencement des dispositifs d'assemblage ou des modules, tels que ceux décrits, à titre d'exemples non limitatifs en lien avec les figures 3A à 3D, 5A à 5D, 6A à 6C et 7A à 7C, formant ledit élément de mobilier sans pour autant requérir à l'emploi de dispositifs de fixation additionnels et/ou d'outillages adaptés. Néanmoins, comme indiqué précédemment, des modes de réalisation prévoient d'avoir recours à des moyens de fixation supplémentaires pour bloquer une translation de l'élément mâle ou pour bloquer le désassemblage. Selon ces modes de réalisation non limitatifs, et conformément aux deux exemples de réalisation décrits respectivement en lien avec les figures 6A à 6C et 7A à 7C, l'invention prévoit qu'un module 2 puisse comprendre une pluralité de trous débouchants 4o pratiqués au sein des différentes parois latérales et/ou pièces 4l, 4l', 4w, 4w', 4w" en trois dimensions. De tels trous 4o, éventuellement taraudés, peuvent être ainsi agencés pour accueillir en une ou plusieurs vis ou tiges filetés agencées pour déboucher dans la rainure 4g et prendre appui sur la paroi interne de la rainure 4g, permettant ainsi de limiter la course par coulissement de la première portion du dispositif d'assemblage au sein de la rainure 4g du module. De tels trous peuvent également être utilisés pour pouvoir accéder aux têtes des vis obliques détaillées précédemment.

Par ailleurs, pour répondre aux contraintes en termes de résistance mécanique, de solidité et pérennité, le ou les modules d'un élément de mobilier conforme à l'invention peuvent être constitué d'un ou plusieurs matériaux, tels que, à titre d'exemple préféré mais non limitatif, du bois massif, éventuellement teinté, puisque le bois est particulièrement apprécié dans le domaine des éléments de mobilier, ou encore d'un ou plusieurs panneaux MDF (acronyme pour l'appellation anglophone « Médium Density Fiberboard ») ou panneau de fibres à densité moyenne. Un tel matériau MDF consiste en un matériau composite de fibres de bois à moyenne densité et d'un liant synthétique. Toutefois, l'invention ne saurait être limitée à ce seul exemple de matériau pour constituer ledit dispositif d'assemblage. En variante, l'invention prévoit que des métaux, tels que l'aluminium ou l'acier, ou encore, notamment pour diminuer les coûts de fabrication, de l'aggloméré puissent être employés pour constituer de tels modules d'un élément de mobilier conforme à l'invention.

Selon des exemples d'applications préférées mais non limitatives, l'invention concerne des éléments de mobilier. Aussi, selon les besoins ou les envies de l'utilisateur, un élément mobilier conforme à l'invention peut être décliné à l'infini. A titre d'exemples non limitatifs, un tel élément mobilier conforme à l'invention peut avantageusement être sélectionné parmi un élément de rangement, une étagère suspendue ou sur pieds, une armoire, un chiffonnier, une bibliothèque, une commode, une table, une console ou encore un bar.

Un dispositif d'assemblage et un élément de mobilier conformes à l'invention ont été précédemment décrits en application avec des éléments de mobiliers modulables. Comme précédemment mentionné, l'invention ne saurait toutefois être limitée à ce seul exemple d'application et pourrait être en lieu et place employée en lien avec tout élément ou objet modulable que l'on souhaite aisément pouvoir assembler et/ou désassembler, tel que, par exemple, des étagères combinées multifonctions, des cloisons de séparation de pièces, des vitrines en devanture de magasins, des panneaux muraux éventuellement décoratifs ou encore des encadrements de portes. Plus généralement, un tel dispositif d'assemblage pourrait également être utilisé en lien avec des cabanes et maisons en kit, constituées éventuellement et principalement en bois ou en tout autre matériau adapté à la construction.

Par ailleurs, un élément de mobilier conforme à l'invention étant déclinable à l'infini, toutes les solutions ou modes de réalisation n'ont pas été décrits, notamment à des fins de concision. Néanmoins, en variante ou en complément, l'invention prévoit qu'un dispositif d'assemblage conforme à l'invention et un élément femelle d'un module lorsque l'élément femelle est compris au sein dudit module puisse consister en une seule et même entité physique, réduisant les risques de pertes de pièces d'un élément de mobilier conforme à l'invention : le module et le dispositif d'assemblage consistent alors en une seule et même entité physique, le module comprenant alors directement un dispositif d'assemblage en lieu et place d'une rainure. En variante ou complément encore, l'invention prévoit qu'un dispositif d'assemblage puisse comporter plus d'un élément mâle ou de deux portions, de telles portions consistant chacune en des portions d'emboitement, d'embrèvement ou de coulissement, ledit dispositif d'assemblage consistant alors en une pièce de jonction et étant alors agencé pour permettre l'assemblage de deux, trois, voire quatre modules d'un élément de mobilier. L'invention ne saurait alors être limitée au nombre de modules dont le dispositif assure l'assemblage. Toujours en variante, un tel dispositif d'assemblage, alors qualifié de « pièce de raccordement » pourrait éventuellement comporter, outre les première et deuxième portions 301,302 précédemment décrites, une rainure 4g permettant l'assemblage dudit dispositif d'assemblage avec un deuxième dispositif d'assemblage.

Par ailleurs, pour permettre d'améliorer l'esthétique et les finitions d'un élément de mobilier conforme à l'invention, l'invention prévoit qu'un module d'un élément de mobilier conforme à l'invention puisse consister en un cache, présentant ainsi une forme équivalente à un parallélépipède rectangle longitudinal, définissant ainsi une unique rainure longitudinale, agencée pour coopérer avec un ou plusieurs dispositifs d'assemblage conforme à l'invention, et permettant finalement de masquer les rainures présents sur d'autres modules formant, par exemple, les parois latérales d'un élément de mobilier conforme à l'invention.

## Revendications

1. Dispositif d'assemblage de premier et deuxième modules (2) d'un élément de mobilier ou de construction, ledit dispositif comportant un élément femelle (4) et un élément mâle (3) destiné à coopérer avec l'élément femelle (4) du premier module (2) selon une liaison encastrement, ledit élément femelle (4) présentant une rainure (4g) disposant d'une paroi interne (4z, 4m, 4c, 4fs) comprenant plusieurs zones d'appui (4z, 4m, 4c, 4fs), ledit élément mâle (3) comportant un corps (30) longitudinal, comportant des première (301) et deuxième (302) portions et présentant des première et deuxième parois latérales (35, 35', 35") et des parois supérieure (31) et inférieure (37, 37'), la première portion (301) du corps (30) comportant une butée (34) faisant saillie et s'étendant longitudinalement le long d'un axe longitudinal de la première paroi latérale (35, 35'), ladite paroi inférieure (37, 37') présentant deux chanfreins (36,36',36"),
ledit dispositif étant **caractérisé en ce que** la forme et les dimensions de la première portion (301) du corps (30) de l'élément mâle (3) sont déterminées pour être complémentaires et ajustées à celle de la rainure (4g) de l'élément femelle (4) du premier module (2), de sorte que la butée (34), les chanfreins (36, 36', 36") et la paroi inférieure (37, 37') prennent appui sur l'une des zones d'appui de la paroi interne (4z, 4m, 4c, 4fs) de ladite rainure (4g) lors de l'emboitement de l'élément mâle (3) dans l'élément femelle (4) dudit premier module (2).

2. Dispositif d'assemblage selon la revendication précédente, pour lequel les première et deuxième parois latérales (35',35") de la première portion (301) du corps (30) de l'élément mâle (3) sont incurvées selon une même direction, la première portion de la deuxième paroi latérale (35") prenant appui sur la paroi interne (4m,4z) de la rainure (4g) de l'élément femelle (4) du premier module (2) lors de l'emboitement de l'élément mâle (3) dans l'élément femelle (4) dudit premier module (2).

3. Dispositif d'assemblage selon la revendication 1, pour lequel les première et deuxième parois latérales (35',35") de la première portion (301) du corps (30) de l'élément mâle (3) sont sensiblement planes et/ou rectilignes, la première portion (301) du corps (30) comportant en outre une deuxième butée (34) faisant saillie et s'étendant longitudinalement le long d'un axe longitudinal de la deuxième paroi latérale (35), la deuxième butée (34) étant agencée pour prendre appui sur la paroi interne (4m) de ladite rainure (4g) lors de l'emboitement de l'élément mâle (3) dans l'élément femelle (4) dudit premier module (2).

4. Dispositif d'assemblage selon l'une quelconque des revendications précédentes, comportant un deuxième élément femelle (4') du deuxième module, le deuxième élément femelle (4') comprenant une deuxième rainure identique à la rainure du premier élément femelle (4) pour lequel :
- ladite paroi supérieure (31) du corps de l'élément male (3) présente deux chanfreins (32),
- une deuxième portion (302) du corps (30) de l'élément mâle (3) comprend deux épaulements (33) faisant saillie par rapport aux premières et deuxième parois latérales (35,35',35"),
- les chanfreins (32) et les épaulements (33) de la deuxième portion (302) du corps (30) sont dimensionnés et ajustés pour prendre appui sur les parois internes (4z,4m,4c,4fs) de la deuxième rainure (4g) du deuxième élément femelle (4') du deuxième module (2) lors du coulissement de la deuxième portion (302) du corps (30) de l'élément mâle dans l'élément femelle dudit deuxième module.

5. Dispositif d'assemblage selon la revendication précédente, comportant au moins une vis et pour lequel au moins l'un des deux chanfreins (32) de la deuxième portion (302) du corps (30) de l'élément mâle (3) comportent au moins un trou (32o) débouchant dans au moins l'une des première et deuxième parois latérales (35,35',35") respectivement opposées audit au moins un des deux chanfreins (32), ledit au moins un trou (32o) étant taraudé et agencé pour accueillir ladite vis.

6. Élément de mobilier, comportant des premier et deuxième modules (2), **caractérisé en ce qu'**il comporte un dispositif d'assemblage (3) conforme à l'une quelconque des revendications 1 à 3, et dans lequel le premier module comporte l'élément femelle (4) et le deuxième module comporte l'élément male (3).

7. Élément de mobilier, comportant des premier et deuxième modules (2), **caractérisé en ce qu'**il comporte un dispositif d'assemblage (3) conforme aux revendications 4 ou 5, les premier et deuxième modules comprenant chacun un élément femelle (4), pour lequel le l'élément male (3) coopère également et solidairement avec l'élément femelle (4) des premier et deuxième modules (2) selon une liaison mécanique encastrement réversible.

8. Élément de mobilier selon l'une quelconque des revendications 6 ou 7, ledit élément de mobilier étant sélectionné parmi un élément de rangement, une étagère suspendue ou sur pieds, une armoire, un chiffonnier, une bibliothèque, une commode, une table, une console ou encore un bar.

## Patentansprüche

1. Vorrichtung zur Montage eines ersten und eines zweiten Moduls (2) eines Möbel- oder Bauelements, wobei die Vorrichtung ein Aufnahmeelement (4) und ein Steckelement (3) aufweist, das dazu bestimmt ist, mit dem Aufnahmeelement (4) des ersten Moduls (2) entlang einer Steckerbindung zusammenzuwirken, wobei das Aufnahmeelement (4) eine Nut (4g) mit einer Innenwand (4z, 4m, 4c, 4fs) aufweist, die mehrere Anlagebereiche (4z, 4m, 4c, 4fs) umfasst, wobei das Steckelement (3) einen Längskörper (30) aus einem ersten (301) und einem zweiten (302) Abschnitt und mit einer ersten und einer zweiten Seitenwand (35, 35', 35") sowie einer oberen (31) und einer unteren (37, 37') Wand umfasst, wobei der erste Abschnitt (301) des Körpers (30) einen Anschlag (34) aufweist, der vorsteht und sich in Längsrichtung entlang einer Längsachse der ersten Seitenwand (35, 35') erstreckt, wobei die untere Wand (37, 37') zwei Abschrägungen (36, 36', 36") aufweist,
wobei die Vorrichtung **dadurch gekennzeichnet ist, dass** die Form und die Abmessungen des ersten Abschnitts (301) des Körpers (30) des Steckelements (3) so festgelegt sind, dass sie so zu denen der Nut (4g) des Aufnahmeelements (4) des ersten Moduls (2) komplementär und passend sind, dass der Anschlag (34), die Abschrägungen (36, 36', 36") und die untere Wand (37, 37') an einem der Anlagebereiche der Innenwand (4z, 4m, 4c, 4fs) der Nut (4g) anliegen, wenn das Steckelement (3) in das Aufnahmeelement (4) des ersten Moduls (2) eingesetzt wird.

2. Vorrichtung zur Montage nach dem vorhergehenden Anspruch, wobei die erste und die zweite Seitenwand (35', 35") des ersten Abschnitts (301) des Körpers (30) des Steckelements (3) in der gleichen Richtung gekrümmt sind, wobei der erste Abschnitt der zweiten Seitenwand (35") an der Innenwand (4m, 4z) der Nut (4g) des Aufnahmeelements (4) des ersten Moduls (2) anliegt, wenn das Steckelement (3) in das Aufnahmeelement (4) des ersten Moduls (2) eingesetzt wird.

3. Vorrichtung zur Montage nach Anspruch 1, wobei die erste und die zweite Seitenwand (35', 35") des ersten Abschnitts (301) des Körpers (30) des Steckelements (3) im Wesentlichen flach und/oder gerade sind, der erste Abschnitt (301) des Körpers (30) außerdem einen zweiten Anschlag (34) aufweist, der vorsteht und sich in Längsrichtung entlang einer Längsachse der zweiten Seitenwand (35) erstreckt, wobei der zweite Anschlag (34) so angeordnet ist, dass er an der Innenwand (4m) der Nut (4g) anliegt, wenn das Steckelement (3) in das Aufnahmeelement (4) des ersten Moduls (2) eingesetzt wird.

4. Vorrichtung zur Montage nach einem der vorhergehenden Ansprüche, umfassend ein zweites Aufnahmeelement (4') des zweiten Moduls, wobei das zweite Aufnahmeelement (4') eine zweite Nut aufweist, die mit der Nut des ersten Aufnahmeelements (4) identisch ist, wobei :
- die obere Wand (31) des Körpers des Steckelements (3) zwei Abschrägungen (32) aufweist,
- ein zweiter Abschnitt (302) des Körpers (30) des Steckelements (3) zwei Schultern (33) aufweist, die in Bezug auf die erste und zweite Seitenwand (35, 35', 35") vorstehen,
- die Abschrägungen (32) und Schultern (33) des zweiten Abschnitts (302) des Körpers (30) so bemessen und passend sind, dass sie an den Innenwänden (4z, 4m, 4c, 4fs) der zweiten Nut (4g) des zweiten Aufnahmeelements (4') des zweiten Moduls (2) anliegen, wenn der zweite Abschnitt (302) des Körpers (30) des Steckelements in das Aufnahmeelement des zweiten Moduls geschoben wird.

5. Vorrichtung zur Montage nach dem vorhergehenden Anspruch, umfassend mindestens eine Schraube und wobei mindestens eine der beiden Abschrägungen (32) des zweiten Abschnitts (302) des Körpers (30) des Steckelements (3) mindestens ein Loch (32o) umfasst, das in mindestens eine von der ersten und der zweiten Seitenwand (35, 35', 35") mündet, die jeweils der mindestens einen der beiden Abschrägungen (32) gegenüberliegen, wobei das mindestens eine Loch (32o) mit einem Gewinde versehen und dazu bestimmt ist, die Schraube aufzunehmen.

6. Möbelelement, umfassend ein erstes und ein zweites Modul (2), **dadurch gekennzeichnet, dass** es eine Vorrichtung zur Montage (3) nach einem der Ansprüche 1 bis 3 umfasst, und wobei das erste Modul das Aufnahmeelement (4) und das zweite Modul das Steckelement (3) umfasst.

7. Möbelelement, umfassend ein erstes und ein zweites Modul (2), **dadurch gekennzeichnet, dass** es eine Vorrichtung zur Montage (3) nach den Ansprüchen 4 oder 5 umfasst, wobei das erste und das zweite Modul jeweils ein Aufnahmeelement (4) umfassen, bei dem das Steckelement (3) jeweils kraftschlüssig mit dem Aufnahmeelement (4) des ersten und des zweiten Moduls (2) entlang einer reversiblen mechanischen Steckerbindung zusammenwirkt.

8. Möbelelement nach einem der Ansprüche 6 oder 7, wobei das Möbelelement ausgewählt ist aus einem Aufbewahrungselement, einem Hänge- oder Standregal, einem Schrank, einem Sekretär, einem Bücherregal, einer Kommode, einem Tisch, einer Konsole oder einer Bar.

## Claims

1. Device for assembling first and second modules (2) of a furniture or construction element, said device comprising a female element (4) and a male element (3) intended to engage with the female element (4) of the first module (2) according to an embedded connection, said female element (4) having a groove (4g) with an internal wall (4z, 4m, 4c, 4fs) comprising a plurality of bearing zones (4z, 4m, 4c, 4fs), said male element (3) comprising a longitudinal body (30), comprising first (301) and second (302) portions and having first and second lateral walls (35, 35', 35") and upper (31) and lower (37, 37') walls, the first portion (301) of the body (30) comprising a stop (34) which projects and extends longitudinally along a longitudinal axis of the first lateral wall (35, 35'), said lower wall (37, 37') having two chamfers (36, 36', 36"),
said device being **characterized in that** the shape and dimensions of the first portion (301) of the body (30) of the male element (3) are determined to be complementary and adjusted to that of the groove (4g) of the female element (4) of the first module (2), so that the stop (34), the chamfers (36, 36', 36") and the lower wall (37, 37') rest on one of the bearing zones of the internal wall (4z, 4m, 4c, 4fs) of said groove (4g) when the male element (3) is fitted into the female element (4) of said first module (2).

2. Assembly device according to the preceding claim, wherein the first and second lateral walls (35', 35") of the first portion (301) of the body (30) of the male element (3) are curved in the same direction, the first portion of the second lateral wall (35") resting on the internal wall (4m, 4z) of the groove (4g) of the female element (4) of the first module (2) when the male element (3) is fitted into the female element (4) of said first module (2).

3. Assembly device according to claim 1, wherein the first and second lateral walls (35', 35") of the first portion (301) of the body (30) of the male element (3) are substantially planar and/or rectilinear, the first portion (301) of the body (30) further comprising a second stop (34) which projects and extends longitudinally along a longitudinal axis of the second lateral wall (35), the second stop (34) being arranged so as to rest on the internal wall (4m) of said groove (4g) when the male element (3) is fitted into the female element (4) of said first module (2).

4. Assembly device according to any of the preceding claims, comprising a second female element (4') of the second module, the second female element (4') comprising a second groove identical to the groove of the first female element (4), wherein:
- said upper wall (31) of the body of the male element (3) has two chamfers (32),
- a second portion (302) of the body (30) of the male element (3) comprises two shoulders (33) which project with respect to the first and second lateral walls (35, 35', 35"),
- the chamfers (32) and the shoulders (33) of the second portion (302) of the body (30) are dimensioned and adjusted so as to rest on the internal walls (4z, 4m, 4c, 4fs) of the second groove (4g) of the second female element (4') of the second module (2) when sliding the second portion (302) of the body (30) of the male element into the female element of said second module.

5. Assembly device according to the preceding claim, comprising at least one screw and wherein at least one of the two chamfers (32) of the second portion (302) of the body (30) of the male element (3) comprises at least one hole (32o) opening into at least one of the first and second lateral walls (35, 35', 35") respectively opposite said at least one of the two chamfers (32), said at least one hole (32o) being threaded and arranged so as to accommodate said screw.

6. Furniture element, comprising first and second modules (2), **characterized in that** it comprises an assembly device (3) according to any of claims 1 to 3, and wherein the first module comprises the female element (4) and the second module comprises the male element (3).

7. Furniture element, comprising first and second modules (2), **characterized in that** it comprises an assembly device (3) according to claims 4 or 5, the first and second modules each comprising a female element (4), wherein the male element (3) also engages rigidly with the female element (4) of the first and second modules (2) according to a reversible embedded connection.

8. Furniture element according to either claim 6 or claim 7, said furniture element being selected from a storage element, a hanging or free-standing shelf, a wardrobe, a chiffonier, a bookcase, a chest of drawers, a table, a console or a counter.
